# EUROPEAN PATENT SPECIFICATION

(11) **EP 3 061 899 B1**
(45) Date of publication and mention of the grant of the patent: **22.08.2018**
(21) Application number: 14905816.6
(22) Date of filing: 13.11.2014
(51) Int. Cl.: E06B 3/00, E05D 13/00, A47K 3/34, F16B 2/18

(54) **SHOWER DOOR FRAME AND SHOWER DOOR**
DUSCHTÜRRAHMEN UND DUSCHTÜR
CADRE DE PORTE DE DOUCHE ET PORTE DE DOUCHE

(43) Date of publication of application: 31.08.2016
(73) Proprietor: Ideal Sanitary Ware Co., Ltd., Foshan, Guangdong 528225 (CN)
(72) Inventor: WEI, Wuxiang, Foshan, Guangdong 528255 (CN)
(74) Representative: Raynor, Simon Mark
(86) International application number: PCT/CN2014/090984
(87) International publication number: WO 2016/074188

(56) References cited:
- EP-A1- 2 774 519
- CN-A- 101 285 362
- CN-U- 202 044 176
- CN-U- 202 044 176
- CN-U- 202 788 049
- GB-A- 1 474 081
- US-A1- 2009 056 077
- US-A1- 2014 237 903
- US-A1- 2014 250 795

## Description

### Technical Field

This disclosure relates to the field of sanitary and bathing equipment, the invention is directed to a shower door frame according to claim 1 and particularly to a shower door used in a shower room and a shower door frame.

### Background Arts

Document US 2014/0250795 A1 discloses a shower door frame according to the preamble of claim 1. Today, people usually provide shower rooms in bathrooms when performing decoration. Existing shower rooms usually use shower doors with glass panels. Most existing shower doors can be divied into two types, namely, sliding doors with tracks and hinge doors with hinges.

A hinge door includes a metal frame within which a glass panel is provided. Usually at least one glass panel is a fixed glass panel fixed within the frame; that is, the fixed glass panel cannot move relative to the frame. In addition, at least one movable glass panel that can rotate relative to the fixed glass panel is provided within the frame, and the movable glass panel and the fixed glass panel are connected by two or more hinges. When opening or closing the shower door, it only needs to push the movable glass panel to rotate around the axes of the hinges.

A sliding door includes a metal frame including one or two tracks provided at an upper end or a lower end of the sliding door. The track(s) is/are substantailly parallel with the ground. In addition, side frames are provided at both sides of the frame respectively, are perpendicular with the tracks, and fixedly connected to the tracks. At least two glass panels are provided within the frame. Multiple glass panels may be movable ones that can slide back and forth in the tracks. In another case, at least one fixed glass panel that cannot slide relative to the tracks may be provided. If a fixed glass panel is provided, the shower door should at least include one movable glass panel that can slide back and forth in the tracks.

### Technical Problems

At present, many shower rooms are tailored according to customers' needs, and shower doors usually have large volumes and need to be assembled in customers' toilets. When assembling a shower door, a shower door frame needs to be assembled. In other words, multiple side frames and multiple tracks need to be connected to form a shower door frame. According to a prevailing method of assembling a shower door frame, multiple holes are provided to a side frame, multiple threaded holes are provided to a track, and then, screws pass the holes of the side frame and are screwed in the threaded holes of the track, so that the track and the side frame are fixedly connected by the screws.

However, the current method of assembling a shower door frame is time-consuming, and screws often slip or fracture. As a result, uncertain difficulties are brought to installation of a shower door, which requires much labor to installation persons.

### Technical Solutions

The main objective of the invention is to provide a shower door frame that is easy to install and operate.

Another objective of the invention is to provide a shower door that saves installation time.

To realize the main objective of the invention, the invention provides a shower door frame comprising at least the features of claim 1. According to a preferable solution, the fixture comprises a positioning projection, the plug is located at an outer side of the positioning projection, a groove is provided between the positioning projection and the exit stopper, the locking portion is snap-fitted in the groove, and an end of the locking portion is provided with a guiding portion engageable with the groove.

According to a further solution, the side frame is provided with a positioning slot extending along a longitudinal direction of the side frame, and the positioning projection is mounted in the positioning slot.

According to a yet further solution, the side frame is provided with a positioning through hole through which the plug passes, the side frame is provided with at least one mounting through hole positioned below the positioning through hole, and an installation post passing through the mounting through hole is provided on the fixing base.

According to a yet further solution, the track is provided with a threaded hole, the fixture is provided with a screw through hole, a screw passes through the screw through hole and is screwed in the threaded hole, a lower end of the plug is provided with a step portion positioned on an outer side of the screw through hole, and a head portion of the screw is located in the step portion.

According to a yet further solution, the tensioning member is provided with a hand-held portion positioned below the locking portion.

To realize another objective of the invention, the invention provides in addition to the features of claim 1, a shower door comprising a track extending in a horizontal direction and a side frame vertically arranged relative to the track, at least one glass panel that can move back and forth relative to the track being mounted in the side frame, wherein: a fixture is fixed at an end of the track, and a plug passing through the side frame is provided at an outer side of the fixture and is provided with an exit stopper; and a locking assembly is provided to the side frame, the locking assembly comprising a fixing base fixed on the side frame and a tensioning member connected to the fixing base via a connecting rod, the tensioning member comprising a locking portion snap-fitted to the exit stopper.

### Advantageous Effects

The track of the shower door frame provided by the invention cooperates with the side frame of the shower door frame through the plug and the locking assembly. When installing the shower door frame, first, the fixing base is fixed to the side frame; then, the fixing base is connected to the tensioning member by the connecting rod, the fixture is fixed at an end of the track, and the plug passes through the positioning through hole of the side frame; finally, the tensioning member is snap-fitted to the exit-stopper of the plug, so that the side frame and the track are fixed by the locking portion of the tensioning member cooperating with the exit stopper.

Thus, when assembling the shower door frame, it does not need to fix the track to the side frame using screws. The installation and operations of the shower door frame are very simple, consume less time and require less labor from installation persons, thereby realizing quick and easy assembling of the shower door frame.

In addition, the step portion is provided to a lower end of the fixture. After a screw passes through the fixture and fixes the fixture to the track, the head portion of the screw can be hidden within the step portion, so that the appearance of the shower door frame will not be affected, assembling of other members of the shower door frame will not be affected by the head portion of the screw, and fracture of the head portion of the screw due to other unnecessary pressure can be avoided.

Further, the hand-held portion of the tensioning member can be conveniently held by installation persons and may facilitate operates of the tensioning member, so that the locking portion of the tensioning member can be snap-fitted to the plug quickly and easily, thereby facilitating assembling of the shower door frame.

### Brief Description of the Drawings

Figure 1 shows a structure of an embodiment of the present invention installed in a shower room;
Figure 2 shows a structure of an embodiment of the present invention;
Figure 3 is a structural exploded view of an embodiment of the present invention;
Figure 4 is an enlarged structural view of the track of an embodiment of the present invention;
Figure 5 is an enlarged structural view of the fixture of an embodiment of the present invention;
Figure 6 is an enlarged structural view of the fixture of an embodiment of the present invention from another angle of view;
Figure 7 is an enlarged structural view of the side frame of an embodiment of the present invention;
Figure 8 is an enlarged structural view of the fixing base of an embodiment of the present invention;
Figure 9 is an enlarged structural view of the fixing base of an embodiment of the present invention from another angle of view;
Figure 10 is an enlarged structural view of the tensioning member of an embodiment of the present invention;
Figure 11 is an enlarged structural view of the tensioning member of an embodiment of the present invention from another angle of view;
Figure 12 is an enlarged structural view of the connecting rod of an embodiment of the present invention;
Figure 13 is a structural view of an embodiment of the present invention before installation; and
Figure 14 is a structural view of an embodiment of the present invention during installation.

The present invention will be further described with reference to the accompanying drawings and the embodiments.

### Preferred Embodiments

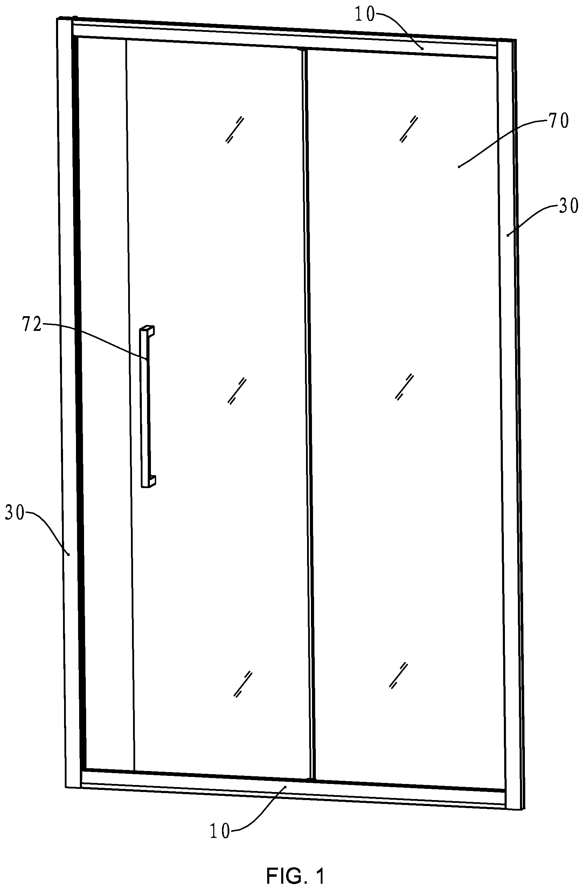

Referring to Figure 1, the shower door of the present invention is a sliding door with tracks. The shower door comprises a metal frame and two glass panels 70 installed within the frame. The shower door frame comprises two tracks 10 respectively provided at an upper end and a lower end of the shower door and parallel with the ground. Side frames 30 are provided between the two tracks 10. Two side frames 30 are respectively arranged at the left side and right side of the shower door, and are perpendicular to the tracks 10. Two glass panels 70 are installed within the frame. In this embodiment, one of the glass panels 70 is a fixed glass panel and cannot slide in the tracks 10; the other one 70 is a movable glass panel mounted with a handle 72, and can slide back and forth in the tracks 10, so that the shower door can be opened and closed.

The present invention relates to a connecting structure between the tracks 10 and the side frames 30, and mainly relates to improvement at the connecting points between the tracks 10 and the side frames 30. The connecting points between the tracks 10 and the side frames 30 are located at four corners of the shower door. Therefore, this invention will mainly describe the structure of the four corners of the shower door.

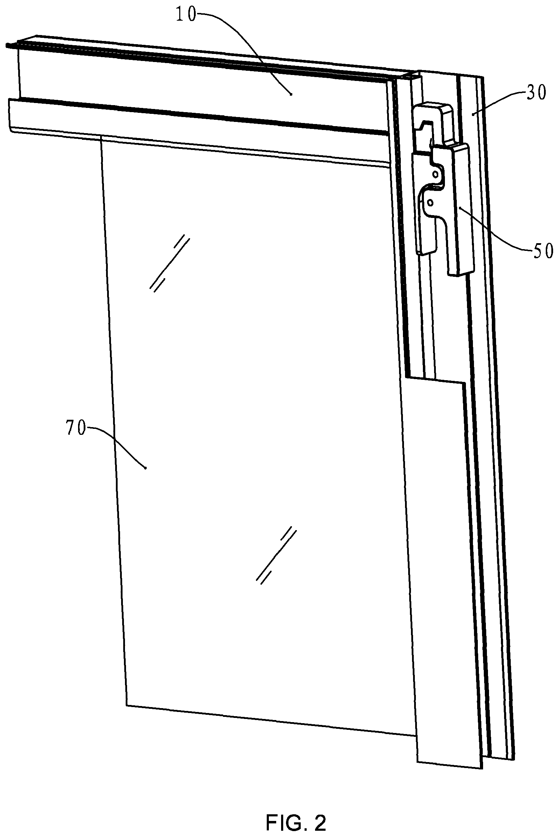

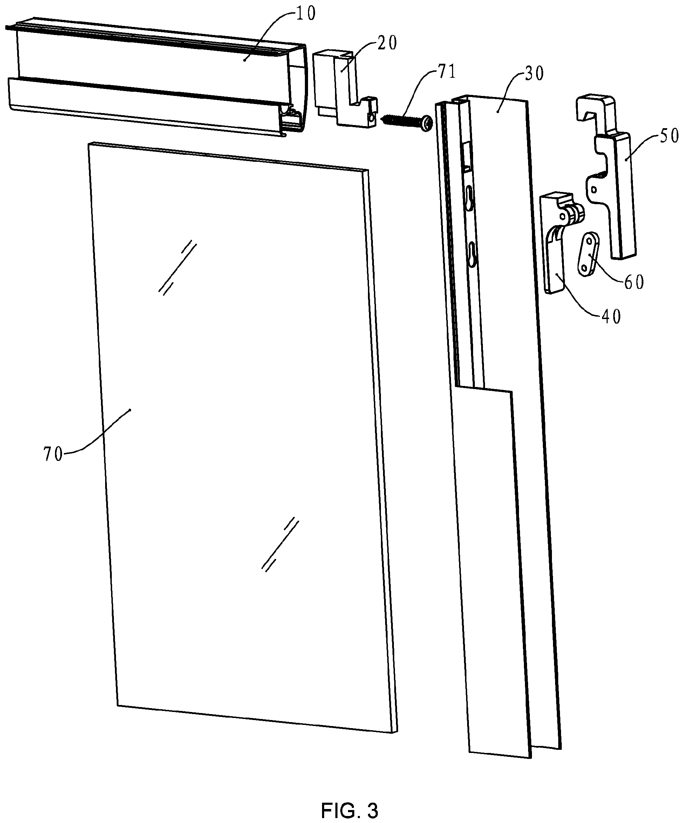

Referring to Figures 2 and 3, an end of the track 10 at an upper end of the shower door is mounted with a fixture 20. The side frame 30 is positioned at an outer side of the track 10, and is provided with a locking assembly comprising a fixing base 40 fixedly mounted to the side frame 30 and a tensioning member 50. The fixing base 40 is connected to the tensioning member 50 by a connecting rod 60. The glass panel 70 is fixed at an inner side of the side frame 30. The glass panel 70 shown in Figures 2 and 3 is a fixed glass panel and cannot move back and forth relative to the track 10.

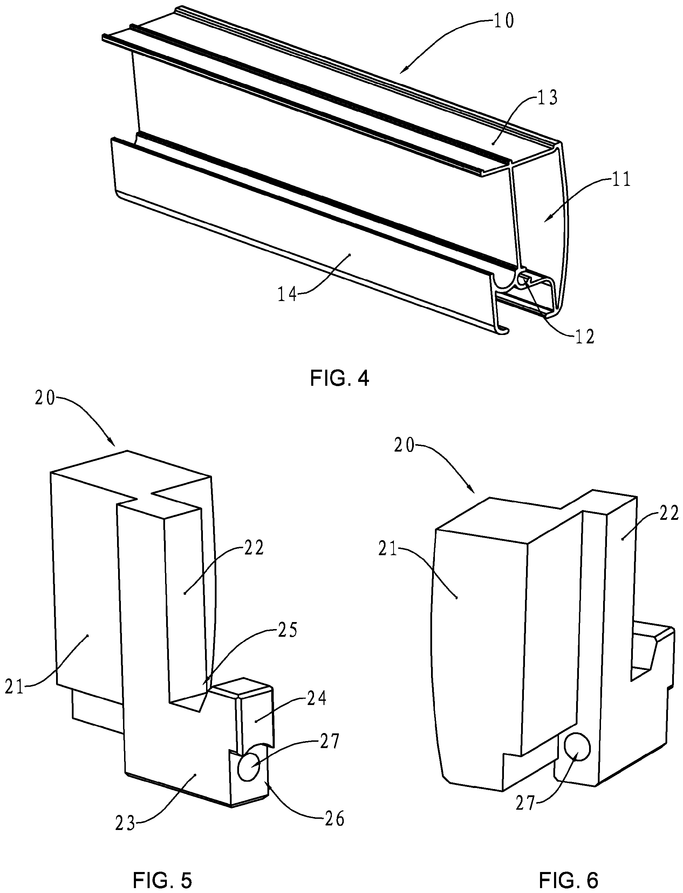

Referring to Figure 4, the track 10 comprises a cover panel 13 at the upper end of the track 10, a side panel 14 at a side wall of the track 10 and a chamber 11 enclosed by multiple metal plates, the chamber 11 extending along a longitudinal direction of the track 10. A threaded hole 12 is provided at a lower end of the chamber 11. Preferably, the threaded hole 12 is formed with inner threads in the form of self-tapping threads.

Referring to Figures 5 and 6, the fixture 20 comprises a base 21. As shown by Figure 3, the base 21 may be mounted in the chamber 11 of the track 10. Therefore, a shape of the base 21 is the same as that of a cross section of the chamber 11, and a dimension of the base 21 is basically the same as that of the cross section of the chamber 11, so that the base 21 can be fixedly mounted in the track 10.

A positioning projection 22 is provided to the base 21 at a side away from the track 10. After the fixture 20 is mounted to the track 10, the positioning projection 22 is disposed at an outer side of the chamber 11; that is, the positioning projection 22 will not be mounted in the track 10. A plug 23 is provided at an outer side of the positioning projection 22, and has a substantially cuboid shape. Of course, in application, the plug 23 may be designed to have a cylindrical or elliptic-cylindrical shape or the like.

An end of the plug 23 is provided with an exit-stopper 24. A groove 25 is formed between the exit-stopper 24 and the positioning projection 22, and is depressed from top to bottom. In this embodiment, the exit-stopper 24 is a right angled trapezoid, and a surface thereof facing the positioning projection 22 is an inclined surface. In application, the exit-stopper 24 may be designed to have a triangular or rectangular shape or the like.

A screw through hole 27 is provided at a lower end of the plug 23. A step portion 26 is provided below the exit-stopper 24 and at an outer side of the screw through hole 27. As shown in Figure 3, when the fixture 20 is fixed in the track 10 and the base 21 of the fixture 20 is installed in the chamber 11, a screw 71 needs to pass through the screw through hole 27, and an end of the screw 71 extends into the threaded hole 12 of the track so as to fix the fixture 20 on the track 10. Since the step portion 26 is provided below the exit-stopper 24, a head portion of the screw 71 can be hidden in the step portion 26, so that the appearance of the fixture 20 will not be affected, and the head portion of the screw 71 will not affect the installation of the track 10 and the side frame 30.

In this embodiment, the screw 71 fixes the fixture 20 in the track 10. In application, a bonding agent such as glue, or an elastic buckle, or a pin or the like may be used to fix the fixture 20 in the track 10.

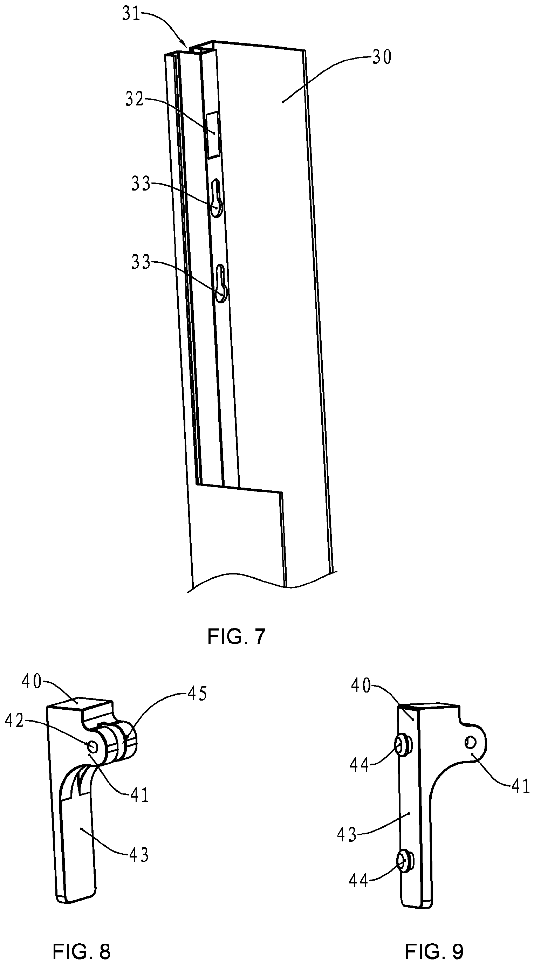

Referring to Figure 7, a positioning slot 31 is provided to the side frame 30 at a side close to the track 10, extends along a longitudinal direction of the side frame 30, and is depressed in a direction away from the track 10 from a position close to the track 10. The positioning projection 22 of the fixture 20 may be mounted in the positioning slot 31 so as to prevent rotation of the side frame 30 relative to the fixture 20. In addition, the glass panel 70, a waterproof sealing stripe, or a shower door positioning member or the like may be mounted in the positioning slot 31.

A positioning through hole 32 is provided to the side frame 30. As shown in Figure 7, the positioning through hole 32 is provided on a bottom wall of the positioning slot 31 away from the track 10. After the track 10 and the side frame 30 are connected, the plug 23 of the fixture 20 passes through the positioning through hole 32, so an area of the positioning through hole 32 is larger than a cross section area of the plug 23. In this embodiment, as the plug 23 is in cuboid shape, the cross section of the positioning through hole 32 is also rectangular. If the plug 23 is circular, elliptical or has other shapes, the positioning through hole 32 should be designed to have a circular, elliptical or other shapes correspondingly.

Two installation through holes 33 are provided below the positioning through hole 32. Each installation through hole 33 is an oblong hole with two circular ends, a diameter of the circle at a lower end is larger than that at an upper end, and a width of the part between the two circular holes is equal to a diameter of the circle at the upper end.

A fixing base 40 is mounted to the side frame 30. Referring to Figures 8-9, the fixing base 40 has a bottom plate 43; an upper end of the bottom plate 43 is provided with a projection 41 perpendicular to the bottom plate 43; a channel 45 is provided at an intermediate portion of the projection 41; and one end of the connecting rod 60 is mounted in the channel 45. In addition, two circular pin holes 42 are provided to the projection 41, and pins can pass through the pin holes 42 to fix the connecting rod 60 within the fixing base 40.

Two installation posts 44 are provided to the bottom plate 43 at a side away from the projection 41, each installation post 44 extending outwards from the bottom plate 43. When the fixing base 40 is mounted to the side frame 30, the two installation posts 44 respectively pass through the installation through holes 33 so as to fix the fixing base 40 to the side frame 30. When the fixing base 40 is mounted to the side frame 30, first, the two installation posts 44 respectively pass through the circles at lower ends of the installation through holes 33; when the fixing base 40 moves upwards relative to the side frame 30, bottoms of the installation posts 44 slip into the circles at upper ends of the installation through holes 33, preventing the installation posts 44 from slipping out of the installation through holes 33.

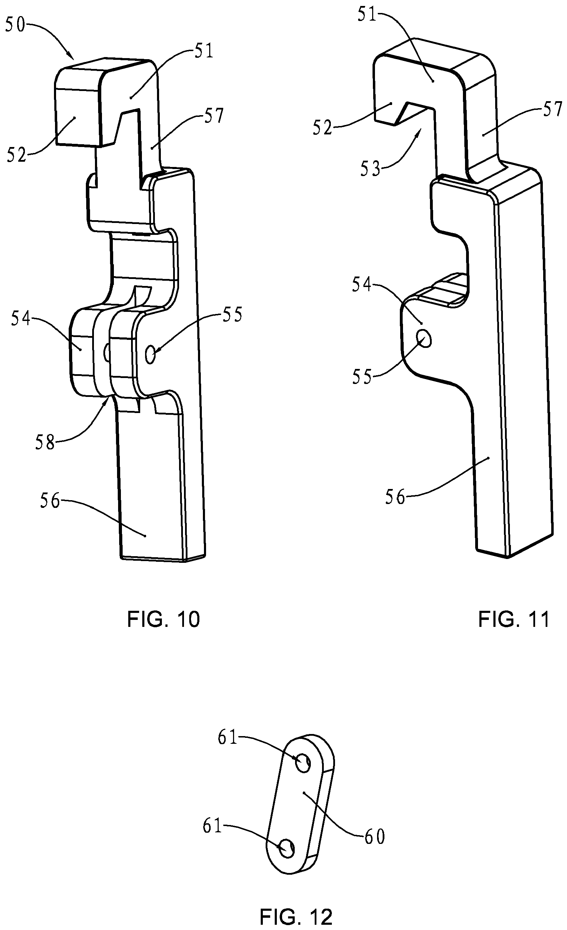

Referring to Figures 10-11, a locking portion 51 is provided at a top of the tensioning member 50, a guiding portion 52 is provided at an end of the locking portion 51, a supporting portion 57 is provided at a lower end of the locking portion 51, and a channel 53 is provided between the guiding portion 52 and the supporting portion 57.

A coupling base 54 is provided below the supporting portion 57. A channel 58 is provided at an intermediate portion of the coupling base 54. An end of the connecting rod 60 can be inserted into the channel 58. Two pin holes 55 are provided to the coupling base 54. Pins can pass through the pin holes 55 to fix one end of the connecting rod 60 to the coupling base 54. In this embodiment, the pin holes 55 are circular holes, so the cross sections of the pins inserted into the pin holes 55 are also circular.

A hand-held portion 56 is provided below the coupling base 54. Preferably, a length of the hand-held portion 56 is larger than that of the coupling base 54 along the extending direction of the side frame to facilitate the operation of the hand-held portion 56 by installation persons. In addition, when making the tensioning member 50, the locking portion 51, the coupling base 54 and the hand-held portion 56 may be integrally formed.

Referring to Figure 12, the connecting rod 60 is a stripe-shaped sheet having semi-circular arcs at its two ends according to the invention. Circular pin holes 61 are provided close to the two ends of the connecting rod 60, respectively. Preferably, the aperture diameter of the two pin holes 61 is equal to that of the pin hole 42 of the fixing base 40 and that of the pin hole 55 of the tensioning member 50. A pin passes through the pin holes 61 and 42 to connect the fixing base 40 and the connecting rod 60. Another pin passes through the pin holes 61 and 55 to connect the connecting rod 60 and the tensioning member 50. Thus, the fixing base 40 and the tensioning member 50 are connected by the connecting rod 60, and the tensioning member 50 can rotate relative to the fixing base 40.

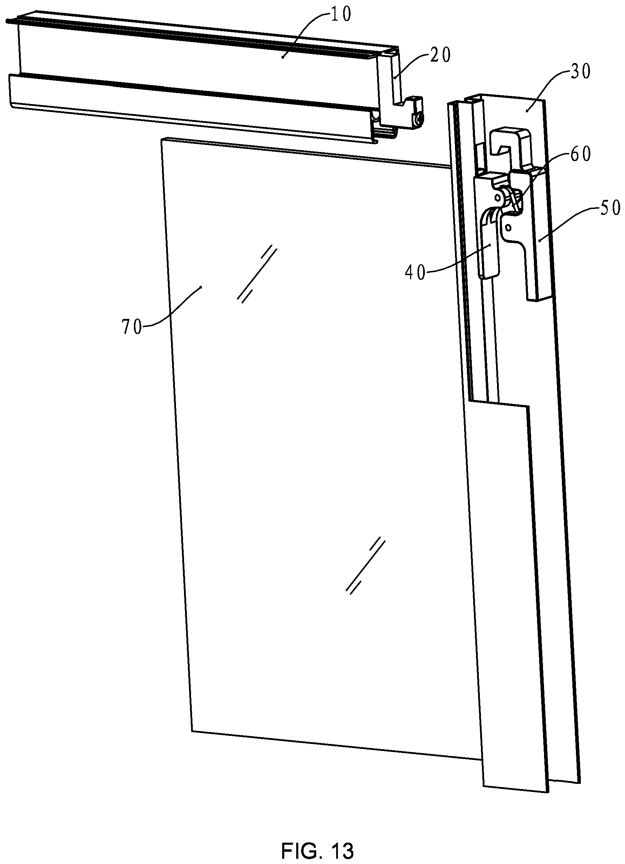

Referring to Figures 3 and 13, when assembling the shower door frame, first, the base 21 of the fixture 20 is mounted into the chamber 11 at the end of the track 10, and the screw 71 passes through the screw through hole 27 of the fixture 20 and is screwed in the threaded hole 12 of the track 10 so as to fix the fixture 20 and the track 10.

In addition, the fixing base 40 is mounted to the side frame 30. When mounting the fixing base 40, the installation posts 44 of the fixing base 40 pass through the installation through holes 33 of the side frame 30. Then, one end of the connecting rod 60 is inserted into the channel 45 of the fixing base 40, and a pin passes through the pin hole 61 of the connecting rod 60 and the pin hole 42. In addition, the other end of the connecting rod 60 is inserted into the channel 58 of the tensioning member 50, and another pin passes through the pin hole 61 at the other end of the connecting rod 60 and the pin hole 55 so as to connect the fixing base 40 and the tensioning member 50.

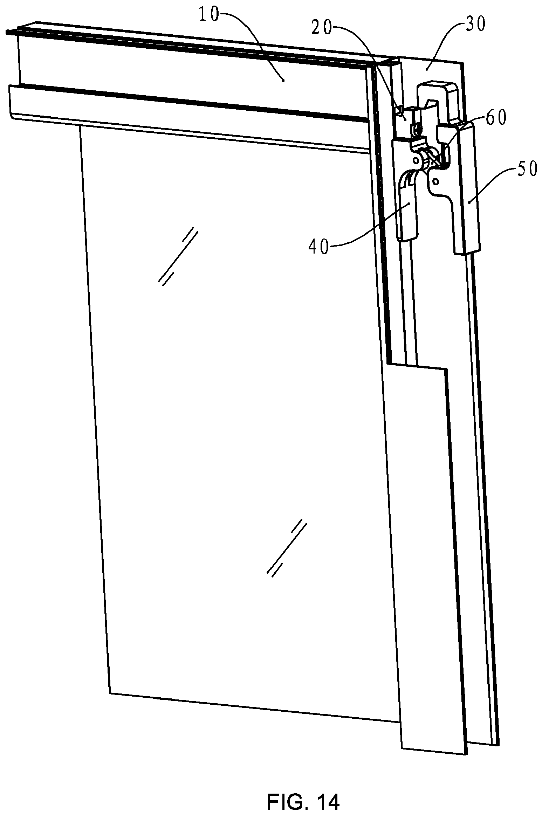

Then, the track 10 is moved such that the plug 23 of the fixture 20 passes through the positioning through hole 32 of the side frame 30, the plug 23 being positioned at a side of the side frame 30 close to the fixing base 40. At this time, the positioning projection 22 of the fixture 20 is mounted into the positioning slot 31 of the side frame 30, as shown in Figure 14.

After that, the hand-held portion 56 of the tensioning member 50 is operated to rotate the tensioning member 50 upwards, so that the locking portion 51 of the tensioning member 50 surpasses the exit-stopper 24 of the fixture 20, and the guiding portion 52 is snap-fitted in a channel 25 of the fixture 20. Then, the tensioning member 50 is reversely pulled, so that the locking portion 51 cannot move backwards due to the exit-stopper 24, and the tensioning member 50 is fixed to the fixing base 40. The assembled shower door frame is shown in Figure 2.

Of course, connection between the fixing base 40 and the connecting rod 60 may not be necessarily realized by pins but by screws. Similarly, connection between the tensioning member 50 and the connecting rod 60 may be realized by screws.

### Industrial Applicability

The shower door of this invention is installed in a toilet, and acts as an important part of a shower room, which may be an integral shower room having a chassis or a shower room enclosed by the shower door and three walls with the shower door installed between two opposite walls. In addition to the features of claim 1, the shower door of this invention may only include an upper track, or may include both upper and lower tracks. If only the upper track is included, coupling assemblies need to be provided at two side frames close to the upper track, respectively, each coupling assembly comprising a fixture, a fixing base, a tensioning member and a connecting rod. If the shower door includes both upper and lower tracks, four coupling assemblies need to be provided at the upper and lower ends of two side frames.

The shower door of this invention is applicable for on-site assembling in customers' bathrooms. By applying the product of this invention, installation operations of the shower door are simple, and it does not need screws to fix the side frame and the tracks. Therefore, installation of the shower door requires less time and less labor from installation persons, thereby realizing quick and easy installation of the shower door.

## Claims

1. A shower door frame, comprising:
a track (10) extending in a horizontal direction, a side frame (30) vertically arranged relative to the track, and a connecting structure providing a connection between the track and the side frame; wherein the connecting structure comprises:
a fixture (20) fixed at an end of the track (10), and a plug (23) passing through the side frame, wherein the plug is provided at an outer side of the fixture and is provided with an exit stopper (24); and
a locking assembly provided to the side frame, the locking assembly comprising a fixing base (40) fixed on the side frame and a tensioning member (50) connected to the fixing base via a connecting rod (60), the tensioning member comprising a locking portion (51) snap-fitted to the exit stopper by operation of the tension member, **characterised in that** the connecting rod (60) has semi-circular arcs at its two ends, circular pin holes (61) are provided close to the two ends of the connecting rod (60), a first pin passes through a first one of the pin holes (61) and through corresponding pin holes (42) in the fixing base (40) to connect the fixing base (40) to the connecting rod (60), and a second pin passes through a second one of the pin holes (61) and through corresponding pin holes (55) in the tensioning member (50) to connect the connecting rod (60) and the tensioning member (50).

2. The shower door frame according to claim 1, wherein the fixture comprises a positioning projection (22), the plug is located at an outer side of the positioning projection, a groove (25) is provided between the positioning projection and the exit stopper, and the locking portion is snap-fitted in the groove.

3. The shower door frame according to claim 2, wherein an end of the locking portion is provided with a guiding portion (52) engageable with the groove.

4. The shower door frame according to claim 2 or 3, wherein the side frame is provided with a positioning slot (31) extending along a longitudinal direction of the side frame, and the positioning projection is mounted in the positioning slot.

5. The shower door frame according to any one of claims 1-3, wherein the side frame is provided with a positioning through hole (32) through which the plug passes.

6. The shower door frame according to claim 5, wherein the side frame is provided with at least one mounting through hole (33) positioned below the positioning through hole, and an installation post (44) passing through the mounting through hole is provided on the fixing base.

7. The shower door frame according to any one of claims 1-3, wherein the track is provided with a threaded hole (12), the fixture is provided with a screw through hole (27), and a screw (71) passes through the screw through hole and is screwed in the threaded hole.

8. The shower door frame according to claim 7, wherein a lower end of the plug is provided with a step portion (26) positioned on an outer side of the screw through hole, and a head portion of the screw is located in the step portion.

9. The shower door frame according to any one of claims 1-3, wherein the tensioning member (50) is provided with a hand-held portion (56) positioned below the locking portion.

10. A shower door comprising a shower door frame according to any one of claims 1-9, wherein:
a glass panel (70) is mounted in the side frame.

## Patentansprüche

1. Duschtürrahmen, der Folgendes umfasst:
eine Schiene (10), die sich in eine horizontale Richtung erstreckt, einen Seitenrahmen (30), der vertikal in Bezug auf die Schiene angeordnet ist, und eine Verbindungsstruktur, die eine Verbindung zwischen der Schiene und dem Seitenrahmen bereitstellt;
wobei die Verbindungsstruktur Folgendes umfasst:
eine Befestigungsvorrichtung (20), die an einem Ende der Schiene (10) befestigt ist und ein Verschlussstück (23), das durch den Seitenrahmen durchgeht, wobei das Verschlussstück an einer Außenseite der Befestigungsvorrichtung bereitgestellt ist und mit einem Austrittstopper (24) bereitgestellt ist; und
eine Verriegelungsanordnung, die an dem Seitenrahmen bereitgestellt ist, wobei die Verriegelungsanordnung eine Befestigungsgrundfläche (40), die auf dem Seitenrahmen befestigt ist, und ein Spannglied (50) umfasst, das über eine Verbindungsstange (60) mit der Befestigungsgrundfläche verbunden ist, wobei das Spannglied einen Verriegelungsabschnitt (51) umfasst, der auf den Austrittstopper durch Betätigen des Spannglieds eingeschnappt ist, **dadurch gekennzeichnet, dass**
die Verbindungsstange (60) an ihren zwei Enden halbkreisförmige Bögen aufweist, runde Stiftbohrungen (61) in der Nähe der zwei Enden der Verbindungsstange (60) bereitgestellt sind, ein erster Stift durch eine erste der Stiftbohrungen (61) und durch entsprechende Stiftbohrungen (42) in der Befestigungsgrundfläche (40) durchgeht, um die Befestigungsgrundfläche (40) mit der Verbindungsstange (60) zu verbinden, und ein zweiter Stift durch eine zweite der Stiftbohrungen (61) und durch entsprechende Stiftbohrungen (55) in dem Spannglied (50) durchgeht, um die Verbindungsstange (60) und das Spannglied (50) zu verbinden.

2. Duschtürrahmen nach Anspruch 1, wobei die Befestigungsvorrichtung einen Positionierungsvorsprung (22) umfasst, wobei sich das Verschlussstück an einer Außenseite des Positionierungsvorsprungs befindet, eine Nut (25) zwischen dem Positionierungsvorsprung und dem Austrittstopper bereitgestellt ist und der Verriegelungsabschnitt in der Nut eingerastet ist.

3. Duschtürrahmen nach Anspruch 2, wobei ein Ende des Verriegelungsabschnitts mit einem Führungsabschnitt (52) bereitgestellt ist, der mit der Nut in Eingriff bringbar ist.

4. Duschtürrahmen nach Anspruch 2 oder 3, wobei der Seitenrahmen mit einem Positionierungsschlitz (31) bereitgestellt ist, der sich entlang einer Längsrichtung des Seitenrahmens erstreckt und der Positionierungsvorsprung in dem Positionierungsschlitz montiert ist.

5. Duschtürrahmen nach einem der Ansprüche 1 bis 3, wobei der Seitenrahmen mit einer Positionierungsdurchgangsbohrung (32) bereitgestellt ist, durch die das Verschlussstück durchgeht.

6. Duschtürrahmen nach Anspruch 5, wobei der Seitenrahmen mit mindestens einer Montagedurchgangsbohrung (33) bereitgestellt ist, die unter der Positionierungsdurchgangsbohrung positioniert ist, und einem Einbaustab (44), der durch die Montagedurchgangsbohrung durchgeht, auf der Befestigungsgrundfläche bereitgestellt ist.

7. Duschtürrahmen nach einem der Ansprüche 1 bis 3, wobei die Schiene mit einer Gewindebohrung (12) bereitgestellt ist, wobei die Befestigungsvorrichtung mit einer Schraubendurchgangsbohrung (27) bereitgestellt ist und eine Schraube (71) durch die Schraubendurchgangsbohrung durchgeht und in der Gewindebohrung eingeschraubt ist.

8. Duschtürrahmen nach Anspruch 7, wobei ein unteres Ende des Verschlussstücks mit einem Stufenabschnitt (26) bereitgestellt ist, der an einer Außenseite der Schraubendurchgangsbohrung positioniert ist, und sich ein Kopfabschnitt der Schraube in dem Stufenabschnitt befindet.

9. Duschtürrahmen nach einem der Ansprüche 1 bis 3, wobei das Spannglied (50) mit einem handgeführten Abschnitt (56) bereitgestellt ist, der unter dem Verriegelungsabschnitt positioniert ist.

10. Duschtür, die einen Duschtürrahmen nach einem der Ansprüche 1 bis 9 umfasst, wobei:
eine Glasplatte (70) in dem Seitenrahmen montiert ist.

## Revendications

1. Cadre de porte de douche, comprenant :
un rail (10) s'étendant selon une direction horizontale, un cadre latéral (30) agencé verticalement par rapport au rail et une structure de raccord fournissant un raccord entre le rail et le cadre latéral ;
ladite structure de raccord comprenant :
un élément de fixation (20) fixé au niveau d'une extrémité du rail (10) et un bouchon (23) traversant le cadre latéral, ledit bouchon étant disposé au niveau d'un côté externe de l'élément de fixation et étant doté d'une butée de sortie (24) ; et
un ensemble de verrouillage disposé sur le cadre latéral, ledit ensemble de verrouillage comprenant une base de fixation (40) fixée sur le cadre latéral et un élément de mise en tension (50) raccordé à la base de fixation par l'intermédiaire d'une tringle (60), ledit élément de mise en tension comprenant une partie de verrouillage (51) ajustée par encliquetage à la butée de sortie par actionnement de l'élément de mise en tension, **caractérisé en ce que**
la tringle (60) possède des arcs semi-circulaires au niveau de ses deux extrémités, des trous de goupille circulaires (61) étant ménagés à proximité des deux extrémité de la tringle (60), une première goupille traversant un premier trou de goupille parmi les trous de goupilles (61) et traversant les trous de goupille correspondants (42) dans la base de fixation (40) pour raccorder la base de fixation (40) à la tringle (60) et une seconde goupille traversant un second trou de goupille parmi les trous de goupille (61) et traversant les trous de goupilles correspondants (55) dans l'élément de mise en tension (50) pour raccorder la tringle (60) et l'élément de mise en tension (50).

2. Cadre de porte de douche selon la revendication 1, ledit élément de fixation comprenant une saillie de positionnement (22), ledit bouchon étant situé au niveau d'un côté externe de la saillie de positionnement, une rainure (25) étant disposée entre la saillie de positionnement et la butée de sortie, et la partie de verrouillage étant ajustée par encliquetage dans la rainure.

3. Cadre de porte de douche selon la revendication 2, une extrémité de la partie de verrouillage étant dotée d'une partie de guidage (52) pouvant se mettre en prise avec la rainure.

4. Cadre de porte de douche selon la revendication 2 ou 3, ledit cadre latéral étant doté d'une fente de positionnement (31) s'étendant le long d'une direction longitudinale du cadre latéral et ladite projection de positionnement étant montée dans la fente de positionnement.

5. Cadre de porte de douche selon l'une quelconque des revendications 1 à 3, ledit cadre latéral étant doté d'un trou traversant de positionnement (32) à travers lequel passe le bouchon.

6. Cadre de porte de douche selon la revendication 5, ledit cadre latéral étant doté d'au moins un trou traversant de montage (33) positionné sous le trou traversant de positionnement et une broche d'installation (44), traversant le trou traversant de montage, étant disposée sur la base de fixation.

7. Cadre de porte de douche selon l'une quelconque des revendications 1 à 3, ledit rail étant doté d'un trou taraudé (12), ledit élément de fixation étant doté d'un trou traversant de vis (27), et une vis (71) traversant le trou traversant de vis et étant vissée dans le trou taraudé.

8. Cadre de porte de douche selon la revendication 7, une extrémité inférieure du bouchon étant dotée d'une partie étagée (26) positionnée sur un côté externe du trou traversant de vis et une partie de tête de la vis étant située dans la partie étagée.

9. Cadre de porte de douche selon l'une quelconque des revendications 1 à 3, ledit élément de mise en tension (50) étant doté d'une partie manuelle (56) positionnée sous la partie de verrouillage.

10. Porte de douche comprenant un cadre de porte de douche selon l'une quelconque des revendications 1 à 9,
un panneau de verre (70) étant monté dans le cadre latéral.
